(19) Europäisches Patentamt
European Patent Office
Office européen des brevets

(11) **EP 1 092 986 A2**

(12) **EUROPÄISCHE PATENTANMELDUNG**

(43) Veröffentlichungstag:
**18.04.2001 Patentblatt 2001/16**

(51) Int Cl.7: **G01S 3/16**

(21) Anmeldenummer: **99121258.0**

(22) Anmeldetag: **25.10.1999**

| | |
|---|---|
| (84) Benannte Vertragsstaaten:<br>**AT BE CH CY DE DK ES FI FR GB GR IE IT LI LU MC NL PT SE**<br>Benannte Erstreckungsstaaten:<br>**AL LT LV MK RO SI** | (72) Erfinder:<br>• **Grüger, Heinrich, Dr.**<br>**01109 Dresden (DE)**<br>• **Gottfried-Gottfried, Ralf, Dipl.-Phys.**<br>**01109 Dresden (DE)** |
| (30) Priorität: **13.10.1999 DE 19949380** | (74) Vertreter: **Schoppe, Fritz, Dipl.-Ing.**<br>**Schoppe, Zimmermann & Stöckeler,**<br>**Patentanwälte,**<br>**Postfach 71 08 67**<br>**81458 München (DE)** |
| (71) Anmelder: **FRAUNHOFER-GESELLSCHAFT ZUR FÖRDERUNG DER ANGEWANDTEN FORSCHUNG E.V.**<br>**80636 München (DE)** | |

(54) **Vorrichtung und Verfahren zum Bestimmen eines Winkels, unter dem eine Strahlung auf eine Referenzebene auftrifft**

(57) Bei einer Vorrichtung und einem Verfahren zum Bestimmen eines Winkels ($\Theta$), unter dem eine Strahlung auf eine Referenzebene (104) auftrifft, wird zunächst mittels einer ersten Sensoreinrichtung, die bezüglich der Referenzebene unter einem ersten Winkel angeordnet ist, und auf die die Strahlung unter einem ersten Einfallswinkel auftrifft, abhängig von diesem Einfallswinkel ein erstes Intensitätssignal ($I_1$) erzeugt. Mittels einer zweiten Sensoreinrichtung (110), die bezüglich der Referenzebene unter einem zweiten Winkel angeordnet ist, und auf die die Strahlung unter einem zweiten Einfallswinkel ($\alpha_2$) auftrifft, wird abhängig von diesem zweiten Einfallswinkel ein zweites Intensitätssignal ($I_2$) erzeugt. In einer Auswertungseinrichtung (220) wird der Winkel ($\Theta$), unter dem die Strahlung (102) auf die Referenzebene (104; 204) auftrifft, abhängig von dem ersten Winkel ($\alpha_1$), dem ersten Intensitätssignal ($I_1$), und dem zweiten Winkel ($\alpha_2$) und dem zweiten Intensitätssignal ($I_2$) bestimmt.

Fig.1

**Beschreibung**

Die vorliegende Erfindung bezieht sich auf eine Vorrichtung und auf ein Verfahren zum Bestimmen eines Winkels, unter dem eine Strahlung auf eine Referenzebene auftrifft, und insbesondere auf eine Vorrichtung und auf ein Verfahren zum Bestimmen eines Winkels, unter dem eine Sonnenstrahlung auf eine Referenzebene auftrifft.

Bei der Beschattung von Gebäudefassaden ist neben der Information, ob die Sonne gerade scheint oder nicht, auch die Richtung des Sonneneinfalls von Interesse. Der Sonneneinfall wird im Normalfall durch die Angabe des Elevations- und des Azimutwinkels bestimmt. Bei der Verwendung von Beschattungseinrichtungen, die aus Lamellen aufgebaut sind, kann die Beschattung durch den Winkel der Lamellen gesteuert werden. Aus dem Lamellenwinkel ergibt sich gleichzeitig die Blickdurchlässigkeit von innen nach außen. Neben der zuverlässigen Vermeidung der Blendung durch das Sonnenlicht ist im allgemeinen eine maximale Blickdurchlässigkeit des Sonnenschutzes wünschenswert.

Auf einfache Art und Weise kann die Steuerung der Lamellenwinkel durch die Elevation, die durch Uhrzeit und Datum für jeden Ort bestimmt ist, erfolgen. Diese Regelung erreicht jedoch nicht die maximale Blickdurchlässigkeit, da die Sonnenstrahlung im allgemeinen unter einem schrägen Winkel auf das Gebäude fällt, so daß nur die Projektionen der Einfallsrichtung auf die Gebäudenormale für die Bestimmung der Lamellenanstellung zu berücksichtigen ist. Ist die Gebäudeausrichtung bekannt, so kann die Projektion durch den durch Uhrzeit und Datum jedes Ortes bestimmten Azimut der Sonne berechnet werden, und die Lamellenanstellung kann entsprechend korrigiert werden. Hierdurch wird die Blickdurchlässigkeit maßgeblich erhöht.

Die Bestimmung des Sonneneinfalls, d.h. der Einfall der Sonnenstrahlen, oder die Bestimmung der Gebäudeausrichtung und die gleichzeitige Berechnung des Sonneneinfalls kann durch verschiedene Anordnungen bzw. Verfahren erfolgen.

Die Gebäudeausrichtung kann beispielsweise entweder entsprechend genauen Plänen entnommen werden oder durch Verwendung eines Kompass manuell bzw. automatisch bestimmt und eingeprägt werden. Bei der Entnahme der Ausrichtung aus Plänen sind zusätzliche Arbeitsschritte erforderlich. Die konkrete Zuordnung der jeweiligen Fassadenrichtung zu den eingebauten Beschattungseinrichtungen birgt eine zusätzliche Fehlerquelle. Die Entnahme der Nordrichtung aus älteren Plänen hat aufgrund der langsamen zeitlichen Veränderung der magnetischen Mißweisung weitere Fehler zur Folge.

Die manuelle Bestimmung der Gebäudeausrichtung durch einen Kompaß erfordert ebenfalls zusätzliche Arbeitsschritte, und sowohl bei der manuellen als auch bei der automatischen Bestimmung der Ausrichtung durch einen Kompaß, der das Erdmagnetfeld nutzt, können durch Eisenteile im Gebäude, wie z.B. Stürze, Stahlbeton, Gerüste u.ä., bzw. durch das Magnetfeld um elektrische Leitungen herum unter Umständen extreme Abweichungen herbeigeführt werden.

Alle Verfahren, die die Ausrichtung eines Gebäudes gemäß der Nordrichtung bestimmen, müssen zusätzlich die geographische Lage (Längen- und Breitengrad) des Aufstellungsortes berücksichtigen, da in einer Zeitzone nur für einen bestimmten Längengrad die Sonne um 12.00 Uhr mittags tatsächlich im Süden steht und die Tageslänge abhängig vom Breitengrad für verschiedene Orte am selben Tag variieren kann. Gegebenenfalls muß die sich einstellende Ungenauigkeit der Lageeinstellung durch entsprechende Korrekturverfahren bei der Lamellensteuerung kompensiert werden. Zusätzlich ist es erforderlich, die Variation des Azimuts, der im Jahresverlauf unterschiedlich ist, zu korrigieren.

Der Nachteil der gerade beschriebenen, herkömmlichen Verfahren besteht darin, daß diese im allgemeinen sehr arbeitsaufwendig sind, und aufgrund der möglichen Fehlerquellen keine zuverlässige Bestimmung der Sonneneinfallsrichtung auf eine Referenzebene ermöglichen.

Ausgehend von diesem Stand der Technik liegt der vorliegenden Erfindung die Aufgabe zugrunde, eine Vorrichtung und ein Verfahren zum Bestimmen eines Winkels, unter dem eine Strahlung auf eine Referenzebene auftrifft, zu schaffen, das einfach und preiswert arbeitet und ohne zusätzliche Einstellung mit hoher Zuverlässigkeit und Genauigkeit den Strahlungseinfallswinkel bestimmt.

Diese Aufgabe wird durch eine Vorrichtung nach Anspruch 1 sowie durch ein Verfahren nach Anspruch 12 gelöst.

Die vorliegende Erfindung schafft eine Vorrichtung zum Bestimmen eines Winkels, unter dem eine Strahlung auf eine Referenzebene auftrifft, mit:

einer ersten Sensoreinrichtung, die bezüglich der Referenzebene unter einem ersten Winkel angeordnet ist, auf die die Strahlung unter einem ersten Einfallswinkel auftrifft und die abhängig von dem ersten Einfallswinkel ein erstes Intensitätssignal erzeugt;

einer zweiten Sensoreinrichtung, die bezüglich der Referenzebene unter einem zweiten Winkel angeordnet ist, auf die die Strahlung unter einem zweiten Einfallswinkel auftrifft und die abhängig von dem ersten Einfallswinkel ein zweites Intensitätssignal erzeugt; und

eine Auswertungseinrichtung, die den Winkel, unter dem die Strahlung auf die Referenzebene auftrifft, abhängig von dem ersten Winkel, dem ersten Intensitätssignal, dem zweiten Winkel und dem zweiten Intensitätssignal bestimmt.

Die vorliegende Erfindung schafft ein Verfahren zum Bestimmen eines Winkels, unter dem eine Strahlung auf eine Referenzebene auftrifft, mit folgenden Schritten:

(a) Erzeugen eines ersten Intensitätssignals, abhängig von einer Strahlung, die unter einem ersten Einfallswinkel auf eine erste Sensoreinrichtung auftrifft;

(b) Erzeugen eines zweiten Intensitätssignals, abhängig von einer Strahlung, die unter einem zweiten Einfallswinkel auf eine zweite Sensoreinrichtung auftrifft; und

(c) Bestimmen des Winkels, unter dem die Strahlung auf die Referenzebene auftrifft, abhängig von dem ersten Intensitätssignal, dem zweiten Intensitätssignal, einem ersten Winkel und einem zweiten Winkel, unter dem die erste Sensoreinrichtung und die zweite Sensoreinrichtung bezüglich der Referenzebene angeordnet sind.

Gemäß der vorliegenden Erfindung wird die Bestimmung eines Einfallswinkels einer bezüglich einer Referenzebene auftreffenden Strahlung ermöglicht, wobei es sich hierbei um eine beliebige Strahlung handeln kann. Gemäß einem bevorzugten Ausführungsbeispiel handelt es sich bei der Strahlung, deren Einfallswinkel bezüglich einer Referenzebene zu bestimmen ist, um eine Lichtstrahlung, insbesondere um eine Sonnenstrahlung.

Der vorliegenden Erfindung liegt die Erkenntnis zugrunde, daß anstelle der im Stand der Technik bekannten, aufwendigen und fehlerbehafteten Verfahren zur Bestimmung eines Einfallswinkels einer von einer Strahlungsquelle auf eine Referenzebene abgestrahlten Strahlung, die Bestimmung der Einfallsrichtung durch Sensoren realisiert werden kann, wobei die einfallende Strahlung durch mehrere strahlungsempfindliche Sensoren, die eine Winkelempfindlichkeit hinsichtlich der Richtung der auffallenden Strahlung aufweisen, erfaßt wird. Die einzelnen Sensoren sind bezüglich der Referenzebene unter festen, horizontalen Winkeln angeordnet und aufgrund dieser Anordnung und der erfindungsgemäßen Relativauswertung von je zwei gemessenen Intensitäten kann die Einfallsrichtung der Strahlung bezüglich der Referenzebene bestimmt werden.

Gemäß dem bevorzugten Ausführungsbeispiel wird anstelle der im Stand der Technik bekannten, aufwendigen und fehlerbehafteten Verfahren zur Bestimmung des Einfallswinkels der Sonnenstrahlung bezüglich einer Referenzebene, die Sonnenrichtung mit Hilfe photoempfindlicher Sensoren bestimmt, die eine Winkelempfindlichkeit hinsichtlich der Richtung des auffallenden Lichtes aufweisen, erfaßt. Die reale Sonneneinfallsrichtung auf eine Fassade ergibt sich unabhängig vom Ort der Messung.

Gemäß der vorliegenden Erfindung muß aufgrund der Berechnungsweise die Elevation nicht berücksichtigt werden, und diese kann, wie bei bekannten Verfahren, aus der Uhrzeit und dem Datum bestimmt werden.

Ist zusätzlich zu der Elevation auch die geographische Lage des Aufstellungsortes der erfindungsgemäßen Vorrichtung bekannt, so kann hierdurch die Gebäudeausrichtung explizit berechnet werden.

Daß die gerade beschriebene Ausführungsform, bei der Sonnenlicht erfaßt wird, nur bei Sonnenschein funktionsfähig ist, ist unproblematisch, da eine Beschattung nur bei Sonnenschein erforderlich ist und bei Einsetzen der Bestrahlung sofort ein Richtungswert zur Verfügung steht.

Bevorzugte Ausführungsbeispiele der vorliegenden Erfindung sind in den Unteransprüchen näher definiert.

Nachfolgend werden anhand der beiliegenden Zeichnungen bevorzugte Ausführungsbeispiele der vorliegenden Erfindung näher erläutert. Es zeigen:

Fig. 1      eine schematische Darstellung zur Erläuterung des erfindungsgemäßen Verfahrens und der erfindungsgemäßen Vorrichtung;

Fig. 2      eine perspektivische Darstellung der erfindungsgemäßen Vorrichtung gemäß einem bevorzugten Ausführungsbeispiel;

Fig. 3      eine Draufsichtdarstellung der Vorrichtung aus Fig. 2; und

Fig. 4      eine Frontansicht der Vorrichtung aus Fig. 2.

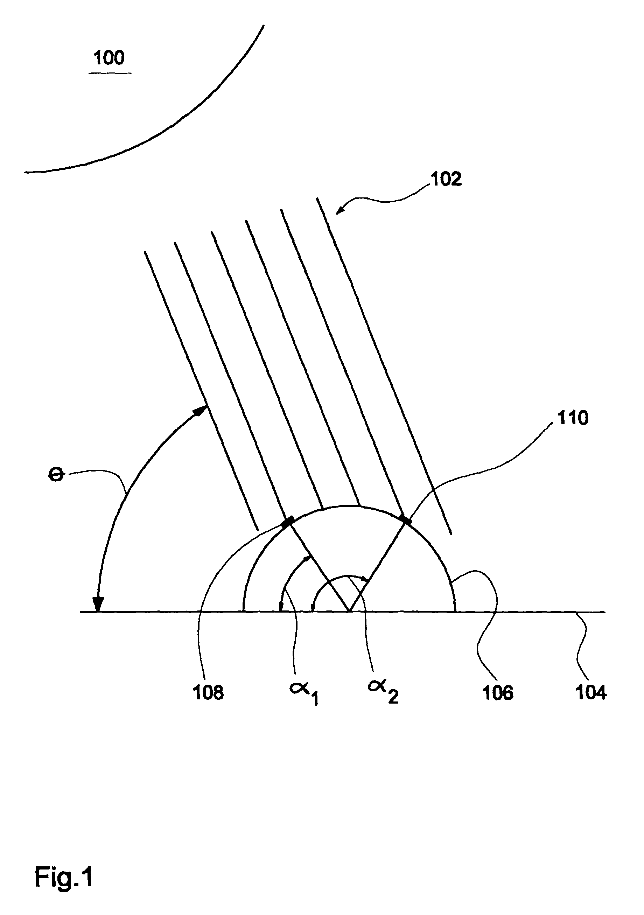

In Fig. 1 ist die erfindungsgemäße Vorrichtung schematisch dargestellt. Eine Strahlungsquelle 100 gibt eine Strahlung 102 ab, die unter einem vorbestimmten Winkel $\Theta$ auf eine Referenzebene bzw. eine Referenzkante 104 auftrifft. Eine im Querschnitt im wesentlichen halbkreisförmige Tragestruktur 106 ist vorgesehen, auf der eine erste Sensoreinrichtung 108 sowie eine zweite Sensoreinrichtung 110 angeordnet sind. Die erste Sensoreinrichtung 108 ist bezüglich der Referenzebene 104 unter einem ersten Winkel $\alpha_1$ angeordnet, und die zweite Sensoreinrichtung 110 ist bezüglich der Referenzebene 104 unter einem zweiten Winkel $\alpha_2$ angeordnet.

Die Sensoren 108 und 110 sind bezüglich der auf diese einfallenden Strahlen 102 empfindlich und sind derart aufgebaut, daß dieselben ein Intensitätssignal erzeugen, das von dem Winkel abhängt, unter dem die Strahlung 102 auf die jeweiligen Sensoreinrichtungen 108 und 110 auftrifft.

Obwohl das bevorzugte Ausführungsbeispiel der vorliegenden Erfindung unter Bezugnahme auf die Sonnenstrahlung beschrieben wird, ist es offensichtlich, daß die vorliegende Erfindung nicht auf eine solche Anwendung beschränkt ist, sondern daß vielmehr die vorliegende Erfindung dazu geeignet ist, den Winkel, unter dem eine beliebige Strahlung auf eine Referenzebene 104 auftrifft zu bestimmen. Mögliche Strahlungen, neben der Sonnenstrahlung, schließen Lichtstrahlen von künstlichen Lichtquelle, Röntgenstrahlung, radioaktive Strahlung oder ähnliches ein. Abhängig von der zu erfassenden Strahlungsart, sind die entsprechenden Sensoreinrichtungen 108 und 110 ausgestaltet, wobei im Falle der Erfassung von Lichtstrahlung Photodioden verwendet werden können, die abhängig von dem Einfallswinkel, unter dem die Lichtstrahlung auf die photoempfindlichen Flächen der Sensoreinrichtungen 108 und 110 fällt, ein Intensitätssignal erzeugen, dessen Betrag eben von diesem Einfallswinkel abhängt.

Mittels einer in Figur 1 nicht dargestellten Auswertungseinrichtung wird der Winkel $\Theta$ abhängig von dem Winkel $\alpha_1$, dem Winkel $\alpha_2$ sowie den durch die Sensoreinrichtungen 108 und 110 erfaßten Intensitäten bestimmt.

Anstelle der in Figur 1 dargestellten zwei Sensoreinrichtungen 108 und 110 können auch weitere Sensoreinrichtungen vorgesehen sein, die gegenüber der Referenzebene 104 unter einem Winkel angeordnet sind, wobei sich dieser Winkel von den bereits beschriebenen Winkeln $\alpha_1$ und $\alpha_2$ unterscheidet. Diese weiteren Sensoren erfassen ebenfalls eine Strahlung und erzeugen abhängig von dem Winkel, unter dem die Strahlung auf den Sensor einfällt, ein weiteres Intensitätssignal.

Bei dem in Fig. 1 dargestellten Beispiel sind somit zwei lichtempfindliche Sensoren oder Detektoren 108 und 110 vorgesehen, die unter den Winkeln $\alpha_1$ und $\alpha_2$ angeordnet sind, und aufgrund dieser Winkel und der Intentitätswerte ergibt sich der Sonneneinfallswinkel $\Theta$ der horizontalen Ebene. Die Wahl der Referenzkante bzw. der Referenzebene 104 ist hierbei frei, solang alle Winkel ($\Theta$, $\alpha_1$, $\alpha_2$) auf die Referenzkante 104 bezogen sind. In der Fig. 1 ist die horizontale Ebene dargestellt, und die Elevation der Sonne 100 fällt bei der Berechnung bzw. Bestimmung des Winkels heraus. Bei bekannter Uhrzeit und bekanntem Datum kann die Elevation berechnet werden. Ist die ferner die geographische Lage bekannt, so kann aus den Meßwerten und der Uhrzeit und dem Datum die Gebäudeausrichtung bestimmt werden, da die Einfallsrichtung der Sonne bezüglich der Nord-Richtung berechnet werden kann.

Die Auswertungseinrichtung ist in diesem Zusammenhang derart ausgestaltet, daß der Winkel $\Theta$ abhängig von den Intensitätssignalen und den Winkeln bestimmt wird, die einem vorbestimmten Sensoreinrichtungspaar zugeordnet sind.

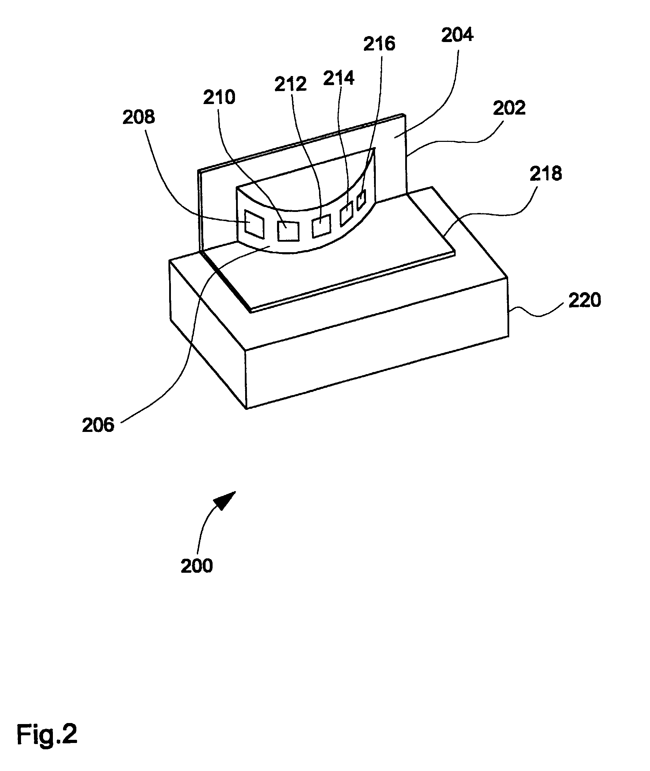

Eine solche Anordnung wird nachfolgend anhand der Figuren 2 bis 4, die eine Ausgestaltung der erfindungsgemäßen Vorrichtung gemäß einem bevorzugten Ausführungsbeispiel darstellt, näher erläutert. Die Vorrichtung 200 umfaßt ein im wesentlichen L-förmiges Bauelement 202, wobei ein Schenkel des L-förmigen Bauelements 202 eine Referenzebene 204 definiert, auf der eine Tragestruktur 206 angeordnet ist, auf der eine Mehrzahl von Sensoren 208 bis 216 angeordnet sind. Wie, insbesondere auch bei einem Vergleich mit der Fig. 1 zu erkennen ist, sind die einzelnen Sensoren 208 bis 216 unter jeweils unterschiedlichen Winkeln bezüglich der Referenzebene 204 angeordnet. Ein zweiter Schenkel des L-förmigen Bauteils 202 bildet eine Montageoberfläche 218, die an einem Gehäuse 220 befestigt ist, das die Auswertungseinheit der erfindungsgemäßen Vorrichtung aufnimmt, die über - nicht dargestellte - Verbindungen mit den jeweiligen Sensoren 208 bis 216 verbunden ist. Die Tragestruktur 206 liegt auf der dem Gehäuse 220 abgewandten Oberfläche der Montageoberfläche 218 auf.

Bei dem in Fig. 2 dargestellten, bevorzugten Ausführungsbeispiel sind fünf Sensoreinrichtungen, z. B. Photosensoren, vorgesehen, die abhängig von dem Einfallswinkel, unter dem Licht auf dieselben fällt, ein Intensitätssignal erzeugen. Gemäß einem bevorzugten Ausführungsbeispiel ist die Auswertungseinrichtung derart ausgestaltet, daß jeweils zwei Sensoreinrichtungen, beispielsweise 208 und 210, 214 und 216 herangezogen werden, um ein entsprechendes Winkelsignal zu erzeugen. Nachfolgend werden dann die beiden Winkel gemittelt, um so den Winkel zu bestimmen, unter dem die Strahlung auf die Referenzebene 204 auftrifft.

Vorzugsweise erfolgt die Mittelung derart, daß das Winkelsignal, welches sich aufgrund des Sensorpaares ergibt, bei dem die Sensoren mit der größten Winkeldifferenz zueinander angeordnet sind, höher gewichtet wird als die übrigen Signale.

Bei dem in Fig. 2 dargestellten Ausführungsbeispiel handelt es sich um eine Vorrichtung zum Bestimmen des Einfallswinkels einer Sonnenstrahlung, beispielsweise auf eine Gebäudefassade, um so beispielsweise eine Sonnenschutzanlage und/oder eine Kunstlichtanlage innerhalb des Gebäudes entsprechend der erfaßten Stellung der Sonne zu steuern. Die Vorrichtung und das Verfahren gemäß der vorliegenden Erfindung können ferner eingesetzt werden, um Blendschutzvorichtungen oder Lichtlenkeinrichtungen zu steuern. Ferner kann auf dem Gebiet der Fotovoltaik eine entsprechende Steuerung erfolgen, um eine optimale Lichtausbeute zu gewährleisten.

Um die Berechnung des Einfallswinkels weiter zu vereinfachen, sind die einzelnen Sensoren 208 bis 216 vorzugsweise senkrecht zur Erdoberfläche angeordnet. Nur wenn die Sensoren 208 bis 216 senkrecht zur Erdoberfläche angeordnet sind, ist die Berechnung deviationsunabhängig. Eine näherungsweise senkrechte Anordnung führt zu nur geringer Abweichungen vom exakten Ergebnis.

Die Sensoren 208 bis 216 sind dem bevorzugten Ausführungsbeispiel lichtempfindliche Sensoren, die eine cosinusförmige Winkelabhängigkeit aufweisen, wodurch sich die Berechnungsvorschrift vereinfacht.

Mit anderen Worten wird gemäß der vorliegenden Erfindung eine Vorrichtung und ein Verfahren geschaffen, mittels dem beispielsweise die Einfallsrichtung von Sonnenstrahlen auf ein Gebäude bzw. eine Gebäudeausrichtung bestimmt werden kann. Die Vorrichtung besteht aus den lichtempfindlichen Sensoren 208 bis 216, die unter festgelegten horizontalen Winkeln und vorzugsweise senkrecht zur Erdoberfläche angeordnet sind. Die Winkelabhängigkeit des Lichtsignals von der Einfallsrichtung auf dem Sensor ist ebenfalls bekannt, so daß für den Fall, daß Sonnenlicht auf das Gerät fällt, die gemessenen Intensitäten von jeweils zwei Sensoren verwendet werden, um zueinander ins Verhältnis gesetzt zu werden. Durch diese Relativmessung und die senkrechte Anordnung wird der Einfluß der Elevation auf die Richtungsbestimmung eliminiert und zu dem die Messung unabhängig von der absoluten Intensität.

Durch den Winkel, in dem die zwei Sensoren zueinander stehen und die bekannte Winkelabhängigkeit legt die Einfallsrichtung des Sonnenlichts die Intensitäten eindeutig fest.

Umgekehrt kann aus den gemessenen Intensitäten die horizontale Einfallsrichtung bestimmt werden. Über die Uhrzeit und das Datum kann die Elevation berechnet werden und somit stehen alle erforderlichen Informationen für die optimale Beschattung mit minimaler Sichtbehinderung zur Verfügung.

Ist ferner die geographische Lage des Aufstellungsortes der erfindungsgemäßen Vorrichtung 200 bekannt, so kann aus den geographischen Daten sowie der Uhrzeit und dem Datum der tatsächliche Sonnenazimut berechnet werden und mit dem gemessenen Sonneneinfallswinkel die Gebäudeausrichtung bzw. die Ausrichtung der erfindungsgemäßen Vorrichtung bestimmt werden.

Werden mehr als zwei Sensoren, wie in Fig. 2 gezeigt, gleichzeitig von der Sonne beschienen, so kann der horizontale Einfallswinkel für jeweils zwei Sensoren bestimmt werden. Die Messung ist um so genauer, je größer die Winkeldifferenz zwischen den Sensoren ist. Werden mehrere Sensorpaare ausgewertet, so kann der Mittelwert zwischen den berechneten Winkeln gebildet werden. Durch eine höhere Gewichtung von Sensorpaaren mit hoher Winkeldifferenz und die damit verbundenen geringeren Meßfehler kann die Genauigkeit weiter gesteigert werden. Wird die Gebäudeausrichtung bestimmt, so kann über eine zeitliche Mittelung die Messung mit hoher Präzision erfolgen.

Gemäß einem bevorzugten Ausführungsbeispiel handelt es sich bei den Sensoren 208 bis 216 um Photodioden, die bezüglich der Referenzebene unter den Winkeln von 30°, 60°, 90°, 120° und 150° angeordnet sind.

Gemäß einem Ausführungsbeispiel wird der Sonnenwinkel Θ basierend auf der nachfolgenden, einfachen Berechnungsvorschrift zur Bestimmung des Sonnenwinkels zwischen der i-ten und j-ten Photodiode bestimmt (i, j: 1, 2, 3, ..., i ungleich j:

$$\Theta_{ij} = \arctan \frac{\cos(\alpha_i) - (I_i/I_j) \cdot \cos(\alpha_j)}{(I_i/I_j) \cdot \sin(\alpha_j) - \sin(\alpha_i)}$$

Θ  Winkel, unter dem die Strahlung auf die Referenzebene 204 auftrifft,

$\alpha_{i,j}$  Winkel, unter dem die i-te bzw. j-te Sensoreinrichtung bezüglich der Referenzebene angeordnet ist, und

$I_{i,j}$  Intensitätssignal der i-ten bzw. j-ten Sensoreinrichtung.

Die Berechnungsvorschift ergibt nur bei senkrechter Montage der Fotodioden und bei cosinusförmiger winkelabhängigkeit des Signals völlig exakte Ergebnisse.

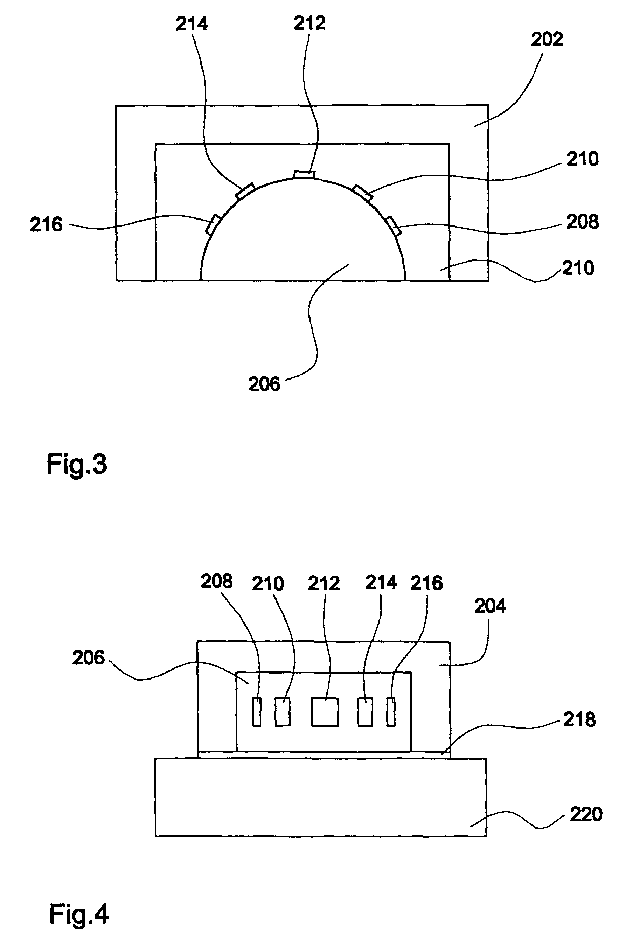

In Fig. 3 und 4 ist eine Draufsichtdarstellung sowie eine Frontansicht der in Fig. 2 gezeigten Vorrichtung 200 dargestellt.

**Patentansprüche**

1. Vorrichtung zum Bestimmen eines Winkels (Θ), unter dem eine Strahlung (102) auf einer Referenzebene (104; 204) auftrifft, mit:

einer ersten Sensoreinrichtung (108; 208), die bezüglich der Referenzebene (104; 204) unter einem ersten Winkel ($\alpha_1$) angeordnet ist, auf die die Strahlung (102) unter einem ersten Einfallswinkel auftrifft und die abhängig von dem ersten Einfallswinkel ein erstes Intensitätssignal ($I_1$) erzeugt;

einer zweiten Sensoreinrichtung (110; 210), die bezüglich der Referenzebene 104 unter einem zweiten Winkel ($\alpha_2$) angeordnet ist, auf die die Strahlung (102) unter einem zweiten Einfallswinkel auftrifft und die abhängig von dem zweiten Einfallswinkel ein zweites Intensitätssignal ($I_2$) erzeugt; und

einer Auswertungseinrichtung (220), die den Winkel (Θ), unter dem die Strahlung (102) auf die Referenzebene (104; 204) auftrifft, abhängig von dem ersten Winkel ($\alpha_1$), dem ersten Intensitätssignal ($I_1$), und dem zweiten Winkel ($\alpha_2$) und dem zweiten Intensitätssignal ($I_2$) bestimmt.

2. Vorrichtung nach Anspruch 1, mit zumindest einer weiteren Sensoreinrichtung (212, 214), 216), die bezüglich der Referenzebene (204) unter einem weiteren Winkel angeordnet ist, der sich von dem ersten Winkel ($\alpha_1$) und dem zweiten Winkel ($\alpha_2$) un-

terscheidet, auf die die Strahlung (102) unter einem weiteren Einfallswinkel auftrifft und die abhängig von dem weiteren Einfallswinkel ein weiteres Intensitätssignal erzeugt,

wobei die Auswertungseinrichtung (220) den Winkel (Θ), unter dem die Strahlung (102) auf die Referenzebene (204) auftrifft, abhängig von einem vorbestimmten Sensoreinrichtungspaar bestimmt.

3. Vorrichtung nach Anspruch 2, bei der die Auswertungseinrichtung (220) für eine Mehrzahl von Sensoreinrichtungspaaren jeweils einen Winkel bestimmt und den Winkel (Θ), unter dem die Strahlung auf die Referenzebene (204) auftrifft, durch eine Mittelung der jeweiligen Winkel bestimmt.

4. Vorrichtung nach Anspruch 3, bei der die Auswertungseinrichtung (220) den Winkel des Sensoreinrichtungspaares, das bezüglich der Referenzebene (204) mit der größten Winkeldifferenz zueinander angeordnet ist, bei der Mittelung höher gewichtet.

5. Vorrichtung nach einem der Ansprüche 1 bis 4, bei der die Sensoreinrichtungen (206, 208, 210, 212) senkrecht zur Erdoberfläche angeordnet sind.

6. Vorrichtung nach einem der Ansprüche 1 bis 5, bei der die Sensoreinrichtungen lichtempfindliche Sensoren (206, 208, 210, 212) sind, die eine cosinusförmige Winkelabhängigkeit ihrer Empfindlichkeit gegenüber dem Winkel des einfallenden Lichts aufweisen.

7. Vorrichtung nach einem der Ansprüche 1 bis 6, bei der die Auswertungseinrichtung (220) den Winkel, unter dem die Strahlung (102) auf die Referenzebene (204) auftrifft, für zwei Sensoreinrichtungen gemäß der folgenden Berechnungsvorschrift bestimmt:

$$\Theta_{ij} = \arctan \frac{\cos(\alpha_i) - (I_i/I_j) \cdot \cos(\alpha_j)}{(I_i/I_j) \cdot \sin(\alpha_j) - \sin(\alpha_i)}$$

i,j     1,2,3,...; i ungleich j,

Θ     Winkel, unter dem die Strahlung auf die Referenzebene 204 auftrifft,

$\alpha_{i,j}$     Winkel, unter dem die i-te bzw. j-te Sensoreinrichtung bezüglich der Referenzebene angeordnet ist, und

$I_{i,j}$     Intensitätssignal der i-ten bzw. j-ten Sensoreinrichtung.

8. Vorrichtung nach einem der Ansprüche 1 bis 7, bei der die Strahlung (102) eine Sonnenstrahlung ist.

9. Vorrichtung nach Anspruch 7 oder 8, bei der die Auswertungseinrichtung (220) abhängig von dem Datum und der Uhrzeit die Elevation der Sonne bestimmt.

10. Vorrichtung nach Anspruch 9, bei der die Auswertungseinrichtung (220) abhängig von der geographischen Lage die Ausrichtung der Vorrichtung bestimmt.

11. Vorrichtung nach einem der Ansprüche 7 bis 10, die eine Sonnenschutzanlage, eine Kunstlichtanlage, eine Blendschutzvorrichtung, eine Lichtlenkeinrichtung und/oder eine Fotovoltaikanlage steuert.

12. Verfahren zum Bestimmen eines Winkels (Θ), unter dem eine Strahlung (102) auf einer Referenzebene (104; 204) auftrifft, mit folgenden Schritten:

(a) Erzeugung eines ersten Intensitätssignals ($I_1$), abhängig von einer Strahlung, die unter einem ersten Einfallswinkel auf eine erste Sensoreinrichtung (106; 206) auftrifft;

(b) Erzeugen eines zweiten Intensitätssignals ($I_2$), abhängig von einer Strahlung, die unter einem zweiten Einfallswinkel auf eine zweite Sensoreinrichtung (110; 210) auftrifft; und

(c) Bestimmen des Winkels (Θ), unter dem die Strahlung (102) auf der Referenzebene (104; 204) auftrifft, abhängig von dem ersten Intensitätssignal ($I_1$), und dem zweiten Intensitätssignals ($I_2$), einem ersten Winkel ($\alpha_1$) und einem zweiten Winkel ($\alpha_2$), unter dem die erste Sensoreinrichtung (108; 208) und die zweite Sensoreinrichtung (110; 210) bezüglich der Referenzebene (104; 204) angeordnet sind.

13. Verfahren nach Anspruch 12, bei dem zumindest ein weiteres Intensitätssignal durch eine weitere Sensoreinrichtung (212, 214, 216), die bezüglich der Referenzebene (204) unter einem weiteren Winkel angeordnet ist, der sich von dem ersten Winkel ($\alpha_1$) und dem zweiten Winkel ($\alpha_2$) unterscheidet, abhängig von der Strahlung erzeugt wird, die unter einem weiteren Einfallswinkel auftrifft, wobei im Schritt (c) der Winkel, unter dem die Strahlung auf die Referenzebene (204) auftrifft, abhängig von einem vorbestimmten Sensoreinrichtungspaar bestimmt wird.

14. Verfahren nach Anspruch 13, bei dem für eine Mehrzahl von Sensoreinrichtungspaaren jeweils ein Winkel bestimmt wird und der Winkel (Θ), unter dem die Strahlung auf die Referenzebene auftrifft, durch eine Mittelung der jeweiligen Winkel bestimmt wird.

**15.** Verfahren nach Anspruch 14, bei dem der Winkel desjenigen Sensoreinrichtungspaares, das bezüglich der Referenzebene (204) mit der größten Winkeldifferenz zueinander angeordnet ist, bei der Mittelung höher gewichtet wird.

**16.** Verfahren nach einem der Ansprüche 12 bis 15, bei dem die Sensoreinrichtungen senkrecht zur Erdoberfläche angeordnet sind.

**17.** Verfahren nach einem der Ansprüche 12 bis 16, bei dem die Sensoreinrichtungen lichtempfindliche Sensoren sind, die eine cosinusförmige Winkelabhängigkeit ihrer Empfindlichkeit gegenüber dem Winkel des einfallenden Lichts aufweisen.

**18.** Verfahren nach einem der Ansprüche 12 bis 17, bei der im Schritt (c) der Winkel (Θ), unter dem die Strahlung (102) auf die Referenzebene (204) auftrifft, für zwei Sensoreinrichtungen gemäß der folgenden Berechnungsvorschrift bestimmt wird:

$$\Theta_{ij} = \arctan \frac{\cos(\alpha_i) - (I_i/I_j) \cdot \cos(\alpha_j)}{(I_i/I_j) \cdot \sin(\alpha_j) - \sin(\alpha_i)}$$

i,j      1,2,3,...; i ungleich j,

e      Winkel, unter dem die Strahlung auf die Referenzebene 204 auftrifft,

$\alpha_{i,j}$      Winkel, unter dem die i-te bzw. j-te Sensoreinrichtung bezüglich der Referenzebene angeordnet ist, und

$I_{i,j}$      Intensitätssignal der i-ten bzw. j-ten Sensoreinrichtung.

**19.** Verfahren nach einem der Ansprüche 12 bis 18, bei dem die Strahlung (102) eine Sonnenstrahlung ist.

**20.** Verfahren nach einem der Ansprüche 12 bis 19, bei dem die Elevation der Sonne abhängig von dem Datum und der Uhrzeit bestimmt wird.

**21.** Verfahren nach Anspruch 20, bei dem die Ausrichtung einer Vorrichtung zur Ausführung verfahrensabhängig von der geographischen Lage bestimmt wird.

**22.** Verfahren nach einem der Ansprüche 16 bis 21, das eine Sonnenschutzanlage, eine Kunstlichtanlage, eine Blendschutzvorrichtung, eine Lichtlenkeinrichtung und/oder eine Fotovoltaikanlage steuert.

100

102

110

θ

108    $\alpha_1$    $\alpha_2$    106    104

Fig.1

Fig.2

214    212                          202

210

216                                208

210

206

Fig.3

208  210  212  214  216      204

206

218

220

Fig.4